(19) Europäisches Patentamt
European Patent Office
Office européen des brevets

(11) Veröffentlichungsnummer: **0 372 252 A2**

(12) **EUROPÄISCHE PATENTANMELDUNG**

(21) Anmeldenummer: **89120851.4**

(51) Int. Cl.5: **C08G 75/02**

(22) Anmeldetag: **10.11.89**

(30) Priorität: **23.11.88 DE 3839444**

(43) Veröffentlichungstag der Anmeldung: **13.06.90 Patentblatt 90/24**

(84) Benannte Vertragsstaaten: **BE DE FR GB IT**

(71) Anmelder: **BAYER AG**
**D-5090 Leverkusen 1 Bayerwerk(DE)**

(72) Erfinder: **Schmidt, Manfred, Dr.**
**Erich-Klausener-Strasse 37**
**D-4150 Krefeld(DE)**
Erfinder: **Tresper, Erhard, Dr.**
**Moerser Strasse 394**
**D-4150 Krefeld 11(DE)**
Erfinder: **Alewelt, Wolfgang, Dr.**
**Stratumer Feld 17**
**D-4150 Krefeld-Stratum(DE)**
Erfinder: **Dorf, Ernst-Ulrich, Dr.**
**Bodelschwinghstrasse 16**
**D-4150 Krefeld(DE)**
Erfinder: **Rüsseler, Wolfgang, Dr.**
**Waldhofstrasse 121**
**D-4150 Krefeld(DE)**

(54) **Verfahren zur Herstellung von hochmolekularen, gegebenenfalls verzweigten polyarylensulfiden.**

(57) Die Erfindung betrifft ein Verfahren zur Herstellung von hochmolekularen, gegebenenfalls verzweigten Polyarylensulfiden mit einem geringen Gehalt an organisch gebundenem Halogen. Sie werden in einem polaren, organischen Lösungsmittel durch Umsetzung von Alkalisulfiden und/oder Alkalihydrogensulfiden mit Dihalogenaromaten hergestellt.

EP 0 372 252 A2

## Verfahren zur Herstellung von hochmolekularen, gegebenenfalls verzweigten Polyarylensulfiden

Die Erfindung betrifft ein Verfahren zur Herstellung von hochmolekularen, gegebenenfalls verzweigten Polyarylensulfiden (PAS), vorzugsweise Polyphenylensulfid (PPS), mit einem reduzierten Gehalt an organisch gebundenem Halogen. Sie werden in einem polaren, organischen Lösungsmittel durch Umsetzung von Alkalisulfiden und/oder Alkalihydrogensulfiden mit Dihalogenaromaten hergestellt.

Polyarylensulfide und ihre Herstellung aus den genannten Ausgangskomponenten sind bekannt (z. B. US-PS 3 354 129, EP-OS 171 021).

Polyarylensulfide sind hochtemperaturbeständige Kunststoffe. Sie werden z. B. in hochtechnisierten Anwendungszweigen wie dem Elektro/Elektronik-Sektor verwendet. Derartige Anwendungen stellen hohe Anforderungen z. B. an die Reinheit und Beständigkeit eines Kunststoffes.

Die nach bekannten Verfahren hergestellten Polyarylensulfide haben als Endgruppen überwiegend Mercapto- oder Mercaptid-Gruppen und Halogen.

Die negative Wirkung von Mercapto- bzw. Mercaptidgruppen im Polymeren und Maßnahmen zu ihrer Beseitigung sind bekannt (z. B. JP-OS 62/048 727 und EP-PS 53 344).

Halogen-Endgruppen im Polymer können während der Verarbeitung und Anwendung des Polymers potentiell abspalten bzw. verseifen. Auf diese Weise kann der Elektrolytgehalt im Polymer so weit erhöht werden, daß z. B. Anwendungen im Elektronikbereich kaum möglich sind.

Es sind Verfahren bekannt, PPS in Gegenwart von Mercaptanen herzustellen (z. B. EP-OS 215 273). Jedoch ist nichts über den Chlorgehalt der bei diesem Verfahren hergestellten Produkte bekannt. Zudem ist die Handhabung der meist übel riechenden und leicht oxidierbaren Mercaptane technisch aufwendig.

Gegenstand der Erfindung ist ein Verfahren zur Herstellung von hochmolekularen, gegebenenfalls verzweigten Polyarylensulfiden, bevorzugt Polyphenylensulfid, aus

a) einem oder mehreren Dihalogen(hetero)aromaten der Formeln (I) und/oder (II),

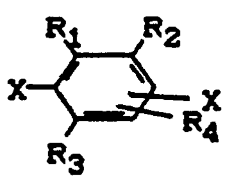

(I)

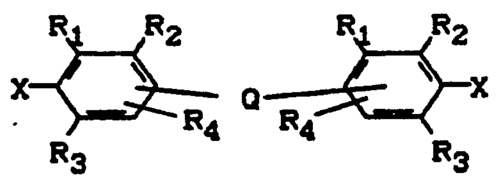

(II)

in denen

X für Halogen (z. B. Chlor, Brom) steht,

$R^1$ bis $R^4$ gleich oder verschieden sind und Wasserstoff, $C_1$-$C_{20}$-Alkyl, $C_3$-$C_{20}$-Cycloalkyl, $C_6$-$C_{24}$-Aryl, $C_7$-$C_{24}$-Alkylaryl und $C_7$-$C_{24}$-Arylalkyl sein können, wobei zwei zueinander ortho-ständige Reste R zu einem aromatischen oder bis zu drei Heteroatome wie N, O oder S enthaltenden heterocyclischen Ring mit 5 bis 7 Ringatomen verknüpft sein können, und

Q für eine Einfachbindung oder zweibindige Gruppen wie -Ar-, -O-, -S-, -SO-, $-SO_2-$, $-(CR_2)_m-$, -CO-, -CO-Ar-CO-, -CO-NH-, -CO-NH-Ar-NH-CO-steht, wobei R die oben angegebene Bedeutung hat, Ar einen zweibindigen $C_6$-$C_{24}$-Aromaten bedeutet und m eine ganze Zahl von 1 bis 24 bedeutet,

und

b) 0 bis 5 Mol-%, bevorzugt 0 bis 1,25 Mol-%, bezogen auf die Summe der Dihalogenaromaten der Formel (I) und/oder (II), eines Tri- oder Tetrahalogenaromaten der Formel (III)

$ArX_n$ (III),

in welcher

Ar ein aromatischer $C_6$-$C_{30}$-Rest oder heterocyclischer Rest mit 6 bis 30 Ring-Atomen ist, bei dem bis zu neun Ring-C-Atome durch Heteroatome wie N, O, S ersetzt sein können,

X für Halogen (z. B. Brom, Chlor) steht und

n für die Zahlen 3 oder 4 steht,

und

c) 50 bis 100 Mol-% Alkalisulfid wie Natrium- oder Kaliumsulfid und 0 bis 50 Mol-% Alkalihydrogensulfid wie Natrium- oder Kaliumhydrogensulfid, wobei das molare Verhältnis von (a + b) : c im Bereich von 0,75 : 1 bis 1,15 : 1, vorzugsweise 0,90 : 1 bis 1,1 : 1 liegt,

d) in einem organischen Lösungsmittel, gegebenenfalls unter Mitverwendung von Katalysatoren und/oder Cosolventien, wobei das molare Verhältnis von c) zu dem organischen Lösungsmittel im Bereich von 1 : 2 bis 1 : 15 liegt, dadurch gekennzeichnet, daß die Umsetzung durch Vermischen von wasserhaltigen Alkalisulfid- und/oder Alkalihydrogensulfid-Lösungen mit Lösungen der Dihalogenaromaten in einem organischen Lösungsmittel bei Temperaturen oberhalb 212° C erfolgt, daß der Wassergehalt der Reaktionslösung höchstens 0,02 Gew.-% beträgt, wobei mit dem Wasser azeotrop abdestillierender Halogenaromat der Formeln (I), (II) oder (III) in das Reaktionsgemisch zurückgeführt wird, und daß nicht umgesetzte Halogenaromaten der Formeln (I), (II) und (III) zum Ende der Reaktion aus dem Reaktionsgemisch entfernt werden.

Beispiele für erfindungsgemäß einsetzbare Dihalogenaromaten der Formel (I) sind 1,4-Dichlorbenzol, 1,4-Dibrombenzol, 1-Brom-4-chlorbenzol, 1,3-Dichlorbenzol, 1,3-Dibrombenzol, 1-Brom-3-chlorbenzol, 2,5-Dichlortoluol, 2,5-Dichlorxylol, 1,4-Dichlor-2-ethylbenzol, 1,4-Dibrom-2-ethylbenzol, 1,4-Dichlor-2,3,5,6-tetramethylbenzol, 1,4-Dichlor-2-cyclohexylbenzol, 2-Benzyl-1,4-dichlorbenzol, 2,4-Dichlortoluol, 2,4-Dichlorxylol, 2,4-Dichlorcumol.

Bevorzugt sind 1,4-Dichlorbenzol, 1,3-Dichlorbenzol und 2,5-Dichlortoluol.

Beispiele für erfindungsgemäß einsetzbare Dihalogenaromaten der Formel (II) sind 4,4′-Dichlordiphenyl, 4,4′-Dibromdiphenyl, 4,4′-Dichlorbenzophenon, 3,3′-Dichlorbenzophenon, 4,4′-Dichlordiphenylsulfon, 1,4-Bis(4′-chlorbenzoyl)benzol, 1,4-Bis(3′-chlorbenzoyl)benzol.

Bevorzugt sind 4,4′-Dichlordiphenyl, 4,4′-Dichlordiphenylsulfon und 4,4′-Dichlorbenzophenon.

Alle Dihalogenaromaten der Formeln (I) und/oder (II) sind allein oder im Gemisch miteinander einsetzbar.

Beispiele für erfindungsgemäß einsetzbare Tri- oder Tetrahalogenaromaten der Formel (III) sind 1,2,4-Trichlorbenzol, 1,3,5-Trichlorbenzol, 2,2′,4,4′-Tetrachlordiphenyl, 2,2′,4,4′-Tetrachlordiphenylsulfid, 1,3,5-Trichlortriazin, 1,2,6-Trichlornaphthalin, Tris-(4-chlorphenyl)benzol usw.

Die Alkalisulfide als Schwefelspender werden in üblichen Mengen und in üblicher Weise eingesetzt. Natrium- oder Kaliumsulfid sind bevorzugt. Es können Sulfide eingesetzt werden, die aus den Hydrogensulfiden mit Natrium-oder Kaliumhydroxid hergestellt werden. Sie können 1 bis 9 Mol Wasser pro Mol Sulfid enthalten und können als Schmelze, gegebenenfalls gemeinsam mit Katalysatoren, eingesetzt werden.

Als Hydrogensulfide sind Natrium- oder Kaliumhydrogensulfide geeignet. Sie können z. B. aus Hydroxiden und Schwefelwasserstoff hergestellt werden oder aus Sulfiden mit Schwefelwasserstoff. Sie können 1 bis 4 Mol Wasser enthalten.

Erfindungsgemäß geeignete organische Lösungsmittel sind aprotische Lösungsmittel, insbesondere N-alkylierte Lactame wie beispielsweise N-Ethylpyrrolidon, N-Methylpiperidon, N-Isopropyl-pyrrolidon, N-Methylcaprolactam oder disubstituierte cyclische Harnstoffe wie beispielsweise N,N′-Dimethylpyrimidazolidinon und N,N′-Dimethylimidazolidinon. Der Siedepunkt der Lösungsmittel und der Umsetzungsmischung beträgt vorzugsweise 212° C bis 280° C. Zur Erreichung des genannten Temperaturbereichs kann die Reaktion unter leichtem Überdruck (bis 10 bar) durchgeführt werden.

Als Cosolventien können beispielsweise N,N-Dialkylcarbonsäureamide von $C_1$-$C_8$-aliphatischen und $C_6$-$C_{12}$-aromatischen Carbonsäuren in einer Menge von 0,02 bis 1 Mol, bezogen auf 1 Mol Natrium- oder Kaliumsulfid, eingesetzt werden, z. B. N,N-Dimethylacetamid, N,N-Diethylacetamid, N,N-Dimethylpropionamid.

Als Katalysatoren können für diesen Zweck übliche Substanzen in üblichen Mengen eingesetzt werden, beispielsweise Alkalisalze wie Halogenide, z. B. Natrium- oder Kalium-fluoride, -phosphate, -carboxylate oder -capronate in Mengen von 0,02 bis 1,0 Mol Katalysator pro Mol S-Spender.

Die Umsetzung kann so durchgeführt werden, daß das Lösungsmittel, die Halogenaromaten der Formel (I) und (II) und/oder (III) gegebenenfalls mit den Katalysatoren und/oder Cosolventien sowie die wasserhaltigen Hydrogensulfide und/oder Sulfide gleichzeitig oder nacheinander der Reaktionsmischung zugeführt werden. Hierbei unterschreitet die Temperatur des Reaktionsgemisches nicht 212° C. Die Temperatur kann bis auf 350° C, bevorzugt 300° C, gesteigert werden. Die Entwässerung erfolgt spontan. Azeotrop abdestillierende Halogenaromaten der Formel (I), (II) oder (III) werden in das Reaktionsgemisch zurückgeführt. Der Wassergehalt des Reaktionsgemisches beträgt so 0 bis 0,02 Gew.-%.

Die Reaktionszeit Kann innerhalb einer weiten Spanne variiert werden. Sie kann von weniger als einer Stunde bis zu mehreren Tagen, vorzugsweise von 1 Stunde bis zu 48 Stunden, besonders bevorzugt 2 bis 18 Stunden, betragen. Nicht umgesetzte Halogenaromaten können am Ende der Reaktion aus dem Reaktionsgemisch beispielsweise destillativ abgetrennt werden.

Die Isolierung der Polyarylensulfide erfolgt beispielsweise durch Abkühlen, Filtern und Waschen des Reaktionsgemisches zunächst mit Ketonen wie Aceton oder Alkoholen wie Methanol, Ethanol oder Isopropanol. Der verbleibende Rückstand wird in Wasser im Verhältnis 1 Gew.-Teil Rückstand zu 5 bis 20 Gew.-

Teilen Wasser suspendiert, die Suspension mit Säuren, z. B. Essigsäure, Salzsäure, Phosphorsäure oder Schwefelsaure auf pH 1 bis 5 gestellt und anschließend mit Wasser neutral gewaschen. Die so erhaltenen Polyarylensulfide besitzen einen sehr niedrigen Gehalt an organisch gebundenen Halogenen. Es beträgt 0,001 bis 0,09 Gew.-%.

Die Bestimmung des Gehaltes an organisch gebundenem Halogen kann z. B. durch Differenzbestimmung aus dem Gesamtchlorgehalt (z. B. bestimmt durch Wickbold-Verbrennung) und dem Gehalt an Chlorid-Ionen (z. B. bestimmt durch bekannte argentometrische Verfahren) erfolgen.

Die Bestimmung der Schmelzviskositäten der nach dem erfindungsgemäßen Verfahren hergestellten Polyarylensulfide als Maß für das Molekulargewicht kann z. B. nach der in der EP-OS 142 024 beschriebenen Methode durchgeführt werden.

Die erfindungsgemäß hergestellten Polyarylensulfide können mit anderen anorganischen oder organischen Oligomeren oder Polymeren, mit üblichen Pigmenten und Füllstoffen, beispielsweise Ruß, Graphit, Metallpulver, Glaspulver, Quarzmehl, Glimmer, Glas- und Kohlenstoffasern oder Fasern aus anderen anorganischen oder organischen Stoffen, mit anorganischen Füllstoffen aus der Reihe der Metalloxide oder Metallsulfate und mit anderen Zusatzstoffen wie beispielsweise Stabilisatoren und/oder Entformungsmittel versetzt werden.

Die erfindungsgemäß hergestellten Polyarylensulfide oder ihre Abmischungen können direkt durch Extrusion, Extrusionsblasen, Spritzgießen oder sonst übliche Verarbeitungstechniken zu Folien, Formkörpern oder Fasern verarbeitet werden. Diese können in üblicher Weise Verwendung finden, z. B. als Automobilteile, Armaturen, Ventile, Kugellagerteile, Elektroteile wie z. B. Schalter, elektronische Tafeln, chemikalienresistente und verwitterungsstabile Teile und Apparate wie Pumpengehäuse und Pumpenflügelräder, Ätzbadschalen, Dichtungsringe, Teile von Büromaschinen, Fernmeldeeinrichtungen, Haushaltsgeräten usw.. Bevorzugt ist die Verwendung der Polymeren im Elektro/Elektronik-Bereich.

Besonders bevorzugt ist die Verwendung der nach dem erfindungsgemäßen Verfahren hergestellten Polymeren zur Ummantelung von elektronischen Bauteilen, beispielsweise Transistoren, Dioden, Mikrochips, usw.

## Beispiele

### Beispiel 1

In einem 4 l Kessel werden unter Stickstoff 1.382,4 g N-Methylcaprolactam und 470,4 g (3,2 Mol) 1,4-Dichlorbenzol vorgelegt und auf 214 °C erwärmt. Innerhalb von 4 Stunden werden eine Lösung von 197,3 g (2,53 Mol) $Na_2S$ und 73,4 g (1,31 Mol) NaHS in 293,9 g Wasser und 2,1 g Phenol (Wassergehalt der Lösung = 51,8 Gew.-%) unter Rühren und azeotroper Entwässerung bei einer Reaktionsmediumtemperatur von 213 °C bis 217 °C eindosiert, wobei das mit dem Wasser abdestillierende 1,4-Dichlorbenzol kontinuierlich in den Reaktor zurückgeführt wird. Proben des Reaktionsgemisches werden nach 1, 2, 3, 4 Stunden in trockenem Methylenchlorid gelöst und der Wassergehalt bestimmt.

| Probe nach | $H_2O$-Gehalt |
|---|---|
| 1 Stunde | < 0,01 % |
| 2 Stunden | < 0,01 % |
| 3 Stunden | < 0,01 % |
| 4 Stunden | < 0,01 % |

Anschließend wird die Temperatur des Reaktionsgemisches erhöht und weitere 8 Stunden unter Rückflußsieden erhitzt, wobei die Innentemperatur auf 240 °C ansteigt. Anschließend werden 50 ml N-Methylcaprolactam und 23,7 g 1,4-Dichlorbenzol abdestilliert. Man fällt das Reaktionsgemisch in 7.000 g Isopropanol unter Rühren, filtert Salz und Polymer ab, wäscht mit 3.000 g Isopropanol nach, suspendiert den Rückstand in 3.000 g Wasser und säuert diese Suspension mit konzentrierter Salzsäure auf pH = 2 an. Das Polymer wird abfiltriert, mehrfach mit Wasser gewaschen und im Vakuum bei 150 °C getrocknet. Ausbeute: 319 g (= 92,3 % bezogen auf Dichlorbenzol). Bestimmung der Schmelzviskosität bzw. des Chlorgehaltes vergl. Tabelle 1.

Beispiel 2

In einem 4 l-Kessel werden unter Stickstoff 1.340,2 g N-Methylcaprolactam und 360,15 g (2,45 Mol) 1,4-Dichlorbenzol vorgelegt und auf 215 °C erwärmt. Innerhalb von 4 Stunden wird eine Lösung von 215,3 g (2,76 Mol) $Na_2S$ und 80,6 g (1,44 Mol) NaHS in 321,4 g Wasser (Wassergehalt der Lösung = 52,1 Gew.-%) unter Rühren und spontaner azeotroper Entwässerung bei einer Reaktionstemperatur von 218 bis 222 °C eindosiert, wobei das mit dem Wasser abdestillierende 1,4-Dichlorbenzol kontinuierlich in das Reaktionsgemisch rückgeführt wird und 3 Stunden nach Dosierbeginn gleichzeitig 154,35 g (1,05 Mol) 1,4-Dichlorbenzol mit der Natriumsulfid/-hydrogensulfid eingetragen werden.

Proben des Reaktionsgemisches werden nach 1, 2, 3, 4 Stunden in trockenem Methylenchlorid gelöst und der Wassergehalt jeweils zu kleiner oder gleich (≦) 0,01 Gew.-% bestimmt.

Die Temperatur des Reaktionsgemisches wird innerhalb von 1/2 Stunde auf 230 °C erhöht, weitere 8 Stunden unter Rückfluß erhitzt und anschließend 50 ml N-Methylcaprolactam und 24,6 g 1,4-Dichlorbenzol abdestilliert, wobei das Reaktionssystem eine Temperatur von 242 °C erreicht. Man isoliert das Polymer analog Beispiel 1 und erhält 349,2 g Polyphenylensulfid (Ausbeute = 92,4 %, bezogen auf Dichlorbenzol). Bestimmung der Schmelzviskosität bzw. des Chlorgehaltes vergl. Tabelle 1.

Beispiel 3

In einem Reaktor, wie in Beispiel 1 beschrieben, werden unter 50 mbar Stickstoff-Überdruck 1.382,4 g N-Methylcaprolactam und 470,4 g (3,2 Mol) 1,4-Dichlorbenzol vorgelegt und auf 215 °C erwärmt. Innerhalb von 220 Minuten werden eine 140 °C heiße Lösung von 415,5 g (3,49 Mol) Natriumsulfid (Wassergehalt = 39,7 Gew.-%) und 72,4 g (0,64 Mol) ε-Caprolactam ( = 20 Mol-% bezogen auf Dichlorbenzol), 1,5 g (0,016 Mol) Phenol (= 0,5 Mol-%, bezogen auf Dichlorbenzol) und 87,3 g Wasser unter 60 mbar Stickstoff-Überdruck bei einer Reaktionstemperatur von 216 bis 219 °C unter Rühren und azeotroper Entwässerung eindosiert, das azeotrop mit dem Wasser abdestillierende 1,4-Dichlorbenzol kontinuierlich in das Reaktionsgemisch rückgeführt, wobei Proben nach 1, 2, 3, 4 Stunden entnommen werden. Der Wassergehalt aller Proben ist kleiner gleich 0,01 Gew.-%. Die Temperatur des Reaktionsgemisches wird innerhalb von 45 Minuten auf 230 °C erhöht, weitere 8 Stunden unter Rückflußsieden erhitzt und anschließend 60 ml N-Methylcaprolactam und 27,5 g 1,4-Dichlorbenzol abdestilliert, wobei das Reaktionsgemisch eine Temperatur von 242 °C erreicht. Das Polymer wird gemäß der in Beispiel 1 beschriebenen Methode isoliert, wobei bei den Wasserwäschen das Polymer frei von Natriumchlorid und Natriumaminocapronat gewaschen wird Man erhält 318 g (Ausbeute 92 %, bezogen auf Dichlorbenzol) Polyphenylensulfid. Bestimmung der Schmelzviskosität und des Halogengehalts s. Tabelle 1.

Vergleichsbeispiel 1

Nicht erfindungsgemäße Variante zum direkten Vergleich.

Durchführung wie Beispiel 2, aber ohne Destillation in der Endphase. Bestimmung der Schmelzviskosität und des Halogengehalts s. Tabelle 1.

Vergleichsbeispiel 2

Synthese von Polyphenylensulfid gemäß US-PS 33 54 129.

In einem mit Rührer ausgerüsteten Autoklaven wurden 129 g Natriumsulfidtrihydrat (= 1 Mol Natriumsulfid) und 300 g N-Methylpyrrolidon zusammengegeben. Das Gemisch wurde mit Stickstoff gespült und langsam bis auf 202 °C erwärmt. Dabei destillieren insgesamt 10 ml Wasser ab (daraus errechnet sich der Restwassergehalt von 1,78 Mol, bezogen auf Natriumsulfid in der Reaktionslösung). Der Ansatz wurde anschließend auf ca 160 °C abgekühlt und 147 g 1,4-Dichlorbenzol (= 1 Mol) in ca. 50 g N-Methylpyrrolidon hinzugefügt. Man erwärmt das Reaktionsgemisch unter einem Stickstoffdruck von 2,5 bar in 30 Minuten auf 245 °C und hält diese Temperatur 3 Stunden. Dabei wird ein Enddruck von 14,5 bar erreicht. Nach

Abkühlen auf Raumtemperatur wird ein grauer Feststoff isoliert, der anschließend mit Wasser gewaschen wird. Man trocknet bei 80 °C im Vakuum und erhält 100,3 g (= 93 %) Poly-p-phenylensulfid mit hellbrauner Farbe. Eine thermoplastische Verarbeitung ist ohne Härtung nicht möglich. Bestimmung der Schmelzviskösität und des Halogengehaltes s. Tabelle 1.

Vergleichsbeispiel 3

Synthese von Polyphenylensulfid gemäß EP-PS 142 024, Beispiel 2.

In einem 2-Liter-Dreihalskolben, der mit Thermometer, Rührer, kühlbarer Kolonne, Destillatteiler und Rückflußkühler ausgerüstet ist, werden unter Stickstoff 1110 g N-Methylcaprolactam, 30,3 g N,N-Dimethylacetamid, 341,1 g 1,4-Dichlorbenzol (= 2,23 Mol) und 2,73 g 1,2,4-Trichlorbenzol (0,65 Mol-% bezogen auf 1,4-Dichlorbenzol) vorgelegt und auf 190 bis 200 °C erwärmt. Dazu wird eine Lösung von 180,9 g Natriumsulfidhydrat (= 2,32 Mol S-Spender) und Natriumhydroxid in insgesamt 250 ml Wasser (einschließlich Hydratwasser) so zugetropft, daß das zugeführte Wasser nahezu gleichzeitig azeotrop mit 1,4-Dichlorbenzol abdestillieren kann. Zur Erhaltung der Stöchiometrie wird abdestilliertes 1,4-Dichlorbenzol nach Abtrennung des Wassers wieder in den Ansatz rückgeführt. Nach beendeter Zugabe und beendeter Entwässerung wird die Kolonne auf Kühlung geschaltet, der Ansatz 10 Stunden zum Rückfluß erhitzt und das Produkt anschließend in üblicher Weise isoliert. Man erhält 225,9 g weißes Polyarylensulfid (90,2 % Ausbeute, bezogen auf 1,4-Dichlorbenzol). Bestimmung der Schmelzviskosität und des Halogengehalts s. Tabelle 1.

Tabelle 1

| Vergleichende Übersicht | | |
|---|---|---|
| Versuchs-Nr. | Schmelzviskosität b. T = 306 °C und D = $10^3$ $s^{-1}$ in Pa.s | Gehalt an organisch gebundenem Chlor in Gew.-% |
| Beispiel 1 | 100 | 0,06 |
| Beispiel 2 | 484 | 0,04 |
| Beispiel 3 | 81 | 0,05 |
| Vergl.-Bsp. 1 | 417 | 0,21 |
| Vergl.-Bsp. 2 | 4,5 | 0,54 |
| Vergl.-Bsp. 3 | 120 | 0,31 |

**Ansprüche**

1. Verfahren zur Herstellung von hochmolekularen, gegebenenfalls verzweigten Polyarylensulfiden aus a) einem oder mehreren Dihalogen(hetero)aromaten der Formeln (I) und/oder (II),

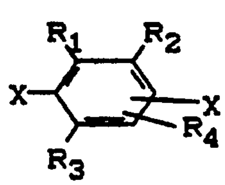

(I)

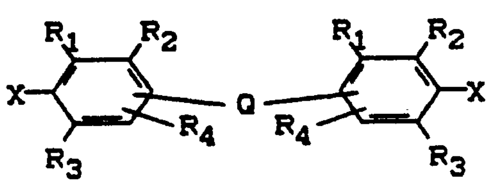

(II)

in denen
X für Halogen steht,

$R^1$ bis $R^4$ gleich oder verschieden sind und Wasserstoff, $C_1$-$C_{20}$-Alkyl, $C_4$-$C_{20}$-Cycloalkyl, $C_6$-$C_{24}$-Aryl, $C_7$-$C_{24}$-Alkylaryl und $C_7$-$C_{24}$-Arylalkyl sein können, wobei zwei zueinander ortho-ständige Reste R zu einem aromatischen oder bis zu drei Heteroatome wie N, O oder S enthaltenden heterocyclischen Ring mit 5 bis 7 Ringatomen verknüpft sein können, und

Q für eine Einfachbindung oder zweibindige Gruppen wie -Ar-, -O-, -S-, -SO-, $-SO_2-$, $-(CR_2)_m-$, -CO-, -CO-Ar-CO-, -CO-NH-, -CO-NH-Ar-NH-CO- steht, wobei R die oben angegebene Bedeutung hat, Ar einen zweibindigen $C_6$-$C_{24}$-Aromaten bedeutet und m eine ganze Zahl von 1 bis 24 bedeutet,

und

b) 0 bis 5 Mol-%, bezogen auf die Summe der Dihalogenaromaten der Formel (I) und/oder (II), eines Tri- oder Tetrahalogenaromaten der Formel (III),

$ArX_n$ (III)

in welcher

Ar ein aromatischer $C_6$-$C_{30}$-Rest oder heterocyclischer Rest mit 6 bis 30 Ring-Atomen ist, bei dem bis zu neun Ring-C-Atome durch Heteroatome wie N, O, S ersetzt sein können,

X für Halogen steht und

n für die Zahlen 3 oder 4 steht,

und

c) 50 bis 100 Mol-% Alkalisulfid und 0 bis 50 Mol-% Alkalihydrogensulfid wie Natrium- oder Kaliumhydrogensulfid, wobei das molare Verhältnis von (a + b) : c im Bereich von 0,75 : 1 bis 1,15 : 1 liegt,

d) in einem organischen Lösungsmittel, gegebenenfalls unter Mitverwendung von Katalysatoren und/oder Cosolventien, wobei das molare Verhältnis von c) zu dem organischen Lösungsmittel im Bereich von 1 : 2 bis 1 : 15 liegt,

dadurch gekennzeichnet, daß die Umsetzung durch Vermischen von wasserhaltigen Alkalisulfid- und/oder Alkalihydrogensulfid-Lösungen mit Lösungen der Dihalogenaromaten in einem organischen Lösungsmittel bei Temperaturen oberhalb 212 °C erfolgt, daß der Wassergehalt der Reaktionslösung höchstens 0,02 Gew.-% beträgt, wobei mit dem Wasser abdestillierender Halogenaromat der Formeln (I), (II) oder (III) in das Reaktionsgemisch zurückgeführt wird, und daß nicht umgesetzte Halogenaromaten der Formeln (I), (II) und (III) zum Ende der Reaktion aus dem Reaktionsgemisch entfernt werden.

2. Verfahren nach Anspruch 1, dadurch gekennzeichnet, daß das molare Verhältnis von (a + b) : c im Bereich von 0,9 : 1 bis 1,10 : 1 liegt.

3. Verfahren nach Anspruch 1, dadurch gekennzeichnet, daß 0 bis 1,25 Mol-%, bezogen auf die Summe der Di halogenaromaten der Formeln (I) und/oder (II), an Tri- oder Tetrahalogenaromaten der Formel (III) verwendet werden.

4. Verfahren nach Anspruch 1, dadurch gekennzeichnet, daß Natriumsulfid und/oder Natriumhydrogensulfid verwendet wird.

5. Verfahren nach Anspruch 1, dadurch gekennzeichnet, daß als organisches Lösungsmittel N-Methylpyrrolidon Verwendung findet.

6. Verfahren nach Anspruch 1, dadurch gekennzeichnet, daß als organisches Lösungsmittel N-Methylcaprolactam Verwendung findet.

7. Verfahren nach Anspruch 1, dadurch gekennzeichnet, daß als organisches Lösungsmittel N,N′-Dimethylimidazolidinon Verwendung findet.

8. Verfahren nach Anspruch 1, dadurch gekennzeichnet, daß als Dihalogenaromaten der Formel (I) 1,4-Dichlorbenzol, 1,3-Dichlorbenzol und/oder 2,5-Dichlortoluol Verwendung finden.

9. Verfahren nach Anspruch 1, dadurch gekennzeichnet, daß als Dihalogenaromaten der Formel (II) 4,4′-Dichlordiphenyl, 4,4′-Dichlordiphenylsulfon und/oder 4,4′-Dichlorbenzophenon Verwendung finden.

10. Verfahren nach Anspruch 1, dadurch gekennzeichnet, daß als Katalysator ε-Caprolactam Verwendung findet.